# EUROPEAN PATENT APPLICATION

(11) **EP 3 643 553 A1**
(43) Date of publication of application: **29.04.2020**
(21) Application number: 19191463.9
(22) Date of filing: 13.08.2019
(51) Int. Cl.: B60L 15/20

(54) **DRY TYPE TORQUE CONVERTER FOR ELECTRIC VEHICLE AND CONTROLLING METHOD THEREOF**

(30) Priority: 25.10.2018 KR 20180128220
(71) Applicant: Valeo Kapec Co., Ltd., Daegu 42709 (KR)
(72) Inventor: KIM, Jeong Jin, 42788 Daegu (KR); LEE, Won Ho, 42751 Daegu (KR); SHIN, Soon-Cheol, 16701 Gyeonggi-do (KR)
(74) Representative: Isarpatent

(57) **Abstract**

A dry type of torque converter for an electric vehicle and a control method thereof are disclosed.
The dry type of torque converter for the electric vehicle according to an exemplary embodiment of the present invention includes: a planetary gear including a first element connected to an input shaft, a second element connected to an output shaft, and a third element variably connected to a fixing unit; at least one eddy current torque generation unit provided between the first element and the second element and generating an eddy current to be controlled by a speed of the output shaft; a front cover integrally connected to the input shaft and the first element and incorporating the planetary gear; a one-way clutch interlocking one-direction connection of the third element and the fixing unit and connecting them to each other; a back cover provided at the output shaft side to be coupled with the front cover; and a lock-up mechanism respectively provided on both sides of the second element based on an axis direction and directly connecting the input shaft and the output shaft while being respectively in selective contact with the inner surfaces of the front cover and the back cover by the centrifugal force generated depending on the rotation speed of the output shaft.

## Description

### BACKGROUND OF THE INVENTION

### (a) Field of the Invention

The present invention relates to a dry type of torque converter for an electric vehicle, and a control method thereof. More particularly, the present invention relates to a dry type of torque converter for an electric vehicle, and a control method thereof, which transfer power of a drive motor to a speed reducer by using an electromagnetic force and a planetary gear.

### (b) Description of the Related Art

Generally, a torque converter is installed between an engine of a vehicle and a transmission, and uses a fluid to transmit driving force of the engine to the transmission. The torque converter includes an impeller rotated by receiving the drive force of the engine, a turbine rotated by an oil discharged from the impeller, and a reactor for increasing a rate of a torque change by directing the flow of the oil returning to the impeller in the rotating direction of the impeller.

The torque converter is equipped with a lock-up clutch (also referred to as a damper clutch), which is a means for directly connecting the engine to the transmission, since the power transmission efficiency may be degraded if the load acting on the engine becomes high. The lock-up clutch is placed between the turbine and a front cover directly connected to the engine so that the rotational power of the engine may be transmitted directly to the turbine.

Meanwhile, recently, as a concern about energy efficiency and environmental pollution problems has gradually increased, development of an environmentally-friendly vehicle capable of being substantially substituted for a vehicle having an internal combustion engine has been required, and the environmentally-friendly vehicles are typically classified into an electric vehicle which is typically driven using a fuel cell or electricity as a power source, and a hybrid vehicle which is driven using an engine and an electric battery.

Among such eco-friendly vehicles, the electric vehicle uses the driving force generated by using a driving motor instead of the engine and the transmission, and it is difficult to apply a conventional torque converter that operates using the fluid flow.

As a result, unlike an internal combustion engine automobile, an electric motor vehicle is mainly applied to a single-stage speed reducer due to an initial high torque of the drive motor and the convenience of control. In recent years, the development of a multi-stage speed reducer has progressed in order to reduce the motor size and decrease the fuel consumption.

However, the multi-stage speed reducer has a problem that the cost is increased because an additional electrical component such as a clutch actuator, a gear actuator, and a transmission control unit (TCU) is additionally required.

Accordingly, the development of a dry type of torque converter that is not a fluid flow type instead of the speed reducer in the electric vehicle is required.

The above information disclosed in this Background section is only for enhancement of understanding of the background of the invention and therefore it may contain information that does not form the prior art that is already known in this country to a person of ordinary skill in the art.

### SUMMARY OF THE INVENTION

Therefore, the present invention, in order to solve the above-mentioned problem, is to provide a dry type of torque converter for an electric vehicle and a control method thereof that are advantageous in a cost and may reduce a size of a drive motor and an inverter of the electric vehicle, and reduce current consumption of the drive motor during the initial operation.

Also, the present invention is to provide a dry type of torque converter and a control method for realizing all functions of a conventional hydraulic torque converter by performing all of torque multiplication using a planetary gear, speed ratio increasing using an eddy current, and direct transfer of a driving force using a lock-up mechanism.

A dry type of torque converter for an electric vehicle according to an exemplary embodiment of the present invention includes: a planetary gear including a first element connected to an input shaft, a second element connected to an output shaft, and a third element variably connected to a fixing unit; at least one eddy current torque generation unit provided between the first element and the second element and generating an eddy current to be controlled by a speed of the output shaft; a front cover integrally connected to the input shaft and the first element and incorporating the planetary gear; a one-way clutch interlocking one-direction connection of the third element and the fixing unit and connecting them to each other; a back cover provided at the output shaft side to be coupled with the front cover; and a lock-up mechanism respectively provided on both sides of the second element based on an axis direction and directly connecting the input shaft and the output shaft while being respectively in selective contact with inner surfaces of the front cover and the back cover by centrifugal force generated depending on the rotation speed of the output shaft.

The eddy current torque generation unit may include: a permanent magnet connected to the first element; and a centrifugal member disposed facing the permanent magnet to have conductivity, connected through a hinge arm hinge-connected to an external circumferential surface of the second element, and controlled by a speed of the output shaft.

The permanent magnet may be disposed at a predetermined interval along the circumferential direction inside the radial direction of the front cover, and the centrifugal member may be connected to the second element through an elastic member.

In the permanent magnet, an N pole and an S pole may be repeatedly arranged along an inner circumferential surface of the front cover.

The lock-up mechanism may include: a lock-up plate disposed to be slidable in the axis direction on both sides of the second element by corresponding to the inner surfaces of the front cover and the back cover based on the axis direction; a pair of rollers mounted to be respectively rotatable on both sides of the hinge arm between the lock-up plate and the hinge arm to move the lock-up plate to the front cover side and the back cover side when the hinge arm moves outwardly in the radial direction by the centrifugal force generated depending on the rotation speed of the output shaft; and a friction member mounted on the inner surface of the front cover and the back cover by corresponding to each lock-up plate.

The lock-up plate may be formed with a ring shape, and at least one contact portion in rolling contact with the roller is formed to be protruded at one surface corresponding to the roller.

The contact portion may be respectively formed in plural at spaced positions along the circumferential direction at one surface of the lock-up plate toward the second element based on the axis direction.

The inclined surface in rolling contact with the roller may be integrally formed in the contact portion.

The inclined surface may have a width that is elongated from the lower part toward the rotation center of the first element toward the upper part outwardly in the radial direction.

A guide hole may be respectively formed in the lock-up plates, a guide protrusion formed at the second element may be inserted into the guide hole of the lock-up plate disposed toward the front cover side, and an end of a hinge shaft supporting the hinge arm to be rotatable may be inserted into the guide hole of the lock-up plate disposed toward the back cover side.

When the lock-up plate slides and moves in the axis direction by the roller, the axis direction movement may be guided by the guide protrusion inserted into each the guide hole and the hinge shaft.

The friction member may be mounted through a mounting plate respectively mounted on the front cover and the back cover.

The mounting plate may be mounted on a mounting groove respectively formed on the inner surfaces of the front cover and the back cover.

The friction member may be mounted in plural to be spaced from each other along a circumferential direction on one surface of the mounting plate toward the lock-up plate.

The eddy current torque generation unit may disconnect the first element and the second element or transmit power with an eddy current torque depending on a speed of the output shaft.

The first element may be a sun gear, the second element may be a carrier, and the third element may be a ring gear.

The eddy current torque generation unit may be provided to be spaced with an equal interval along the circumferential direction of the second element.

A control method of a dry type of torque converter for an electric vehicle according to an exemplary embodiment of the present invention includes, in a planetary gear having a first element connected to an input shaft, a second element connected to an output shaft, a third element variably connected to a fixing unit, and a speed ratio by a predetermined gear ratio: a first step of multiplying a torque output to the second element by fixing and controlling the third element by operation control of a one-way clutch provided between the third element and the fixing unit in a speed ratio by the gear ratio; a second step of transmitting a torque output to the second element by transmitting power as an eddy current torque generated by an eddy current to the first element and the second element by operation control of an eddy current torque generation unit provided between the first element and the second element above the speed ratio by the gear ratio depending on a speed increase of the output shaft; and a third step of directly connecting the input shaft and the output shaft by directly connecting the first and second elements while respectively being in contact with the inner surfaces of a front cover and a back cover in an axis direction by operation control of a lock-up mechanism provided on the second element depending on a speed increase of the output shaft above the speed ratio by the gear ratio and interlocked with the eddy current torque generation unit.

The first step may control the eddy current torque generation unit and the lock-up mechanism to not be operated by the operation of the one-way clutch.

The first step may transmit a part of the output shaft torque to the second element by the non-operation of the eddy current torque generation unit.

The second step may control the one-way clutch and the lock-up mechanism to not be operated by the operation of the eddy current torque generation unit.

The second step may transmit the torque of the output shaft to the second element and the eddy current torque generation unit by the operation of the eddy current torque generation unit.

The third step may control the one-way clutch to not be operated and the eddy current torque generation unit to not be operated by the operation of the lock-up mechanism.

The third step may directly connect the input shaft and the output shaft so that a rotation speed of the input shaft and the output shaft becomes 1:1 by the operation of the lock-up mechanism, the non-operation of the one-way clutch, and the non-operation of the eddy current torque generation unit.

According to the dry type of torque converter for the electric vehicle and the control method according to an exemplary embodiment of the present invention, as the eddy current torque generation unit is provided between the first element (the sun gear) and the second element (the carrier) of the planetary gear, the eddy current may not be generated by the rotation speed of the output shaft or the first and second elements may be disconnected due to the eddy current torque generated by the eddy current or may transmit the power by the eddy current torque, and as the third element (the ring gear) and the fixing unit are fixed or controlled to be rotated in one direction by the one-way clutch, the torque is multiplied in the speed ratio by the gear ratio or the eddy current torque may be output above the speed ratio by the gear ratio.

Also, in the present invention, since the torque multiplication ratio is large, the size of the drive motor M and the inverter connected to the input shaft 1 may be reduced, and the current consumption of the drive motor M may be reduced by entering into a fast high efficiency area through the high speed rotation of the drive motor M.

In addition, the present invention may reduce the manufacturing cost by controlling the output torque up to 0.8 of the input and output speed ratio by the centrifugal force of the output speed without a separate actuator.

In addition, the present invention may directly transmit the torque of the drive motor M through the application of the lock-up mechanism along with the torque multiplication by using the planetary gear and the speed ratio increasing function by using the eddy current of the eddy current torque generation unit, so that the input and output speed may be transmitted at 1:1 and all the functions of the conventional hydraulic torque converter may be realized.

### BRIEF DESCRIPTION OF THE DRAWINGS

FIG. 1 is a schematic diagram of a dry type of torque converter for an electric vehicle according to an exemplary embodiment of the present invention.
FIG. 2 is a cross-sectional view of a dry type of torque converter for an electric vehicle according to an exemplary embodiment of the present invention.
FIG. 3 is a lateral view of a dry type of torque converter for an electric vehicle according to an exemplary embodiment of the present invention.
FIG. 4 and FIG. 5 are an exploded perspective view and a partial parted-exploded perspective view of a dry type of torque converter for an electric vehicle according to an exemplary embodiment of the present invention.
FIG. 6 to FIG. 8 are views showing states of an operation of a planetary gear, a non-operation of an eddy current torque generation unit, and a non-operation of a lock-up mechanism, which are applied to a dry type of torque converter for an electric vehicle according to an exemplary embodiment of the present invention.
FIG. 9 and FIG. 10 are views showing states of a non-operation of a planetary gear, an operation of an eddy current torque generation unit, and a non-operation of a lock-up mechanism, which are applied to a dry type of torque converter for an electric vehicle according to an exemplary embodiment of the present invention.
FIG. 11 to FIG. 13 are views showing states of a non-operation of a planetary gear, a non-operation of an eddy current torque generation unit, and an operation of a lock-up mechanism, which are applied to a dry type of torque converter for an electric vehicle according to an exemplary embodiment of the present invention.
FIG. 14 is a table showing an operation of an eddy current torque generation unit, a lock-up mechanism, and a one-way clutch, which are controlled by a control method of a dry type of torque converter for an electric vehicle according to an exemplary embodiment of the present invention.
FIG. 15 is a table showing an operation of planetary gear elements controlled by a control method of a dry type of torque converter for an electric vehicle according to an exemplary embodiment of the present invention.

### <Description of symbols>

1: input shaft
2: output shaft
10: planetary gear
11: first element (sun gear)
12: second element (carrier)
13: third element (ring gear)
14: fixing unit
21: eddy current torque generation unit
22: front cover
23: one-way clutch
24: back cover
40: lock-up mechanism
41: lock-up plate
42: roller
43: friction member
44: mounting plate
211: permanent magnet
212: centrifugal member
311: hinge arm
312: hinge pin
313: elastic member
GB: speed reducer (gear box)
M: drive motor
P: pinion gear

### DETAILED DESCRIPTION OF THE EMBODIMENTS

An exemplary embodiment of the present invention will hereinafter be described in detail with reference to the accompanying drawings.

Exemplary embodiments described in the present specification and a configuration shown in the drawings are just the most preferable exemplary embodiment of the present invention, but are not limited to the spirit and scope of the present invention. Therefore, it should be understood that there may be various equivalents and modifications capable of replacing them at the time of filing of the present application.

In order to clarify the present invention, parts that are not connected with the description will be omitted, and the same elements or equivalents are referred to by the same reference numerals throughout the specification.

The size and thickness of each element are arbitrarily shown in the drawings, the present invention is not necessarily limited thereto, and in the drawings, the thickness of layers, films, panels, regions, etc., are exaggerated for clarity.

Throughout this specification and the claims which follow, unless explicitly described to the contrary, the word "comprise" or variations such as "comprises" or "comprising" will be understood to imply the inclusion of stated elements but not the exclusion of any other elements.

Further, the terms, "... unit", "... mechanism", "... portion", "... member" etc. used herein mean a unit of inclusive components performing at least one or more functions or operations.

In general, when a planetary gear has one of three elements as a fixing element, the other two elements operate as an input element and an output element, and have a predetermined gear ratio between the input element and the output element.

In this condition, the planetary gear has a characteristic that a torque sum of the input element, the output element, and the fixing element becomes zero, and may transmit the normal torque only at the speed ratio by the predetermined gear ratio.

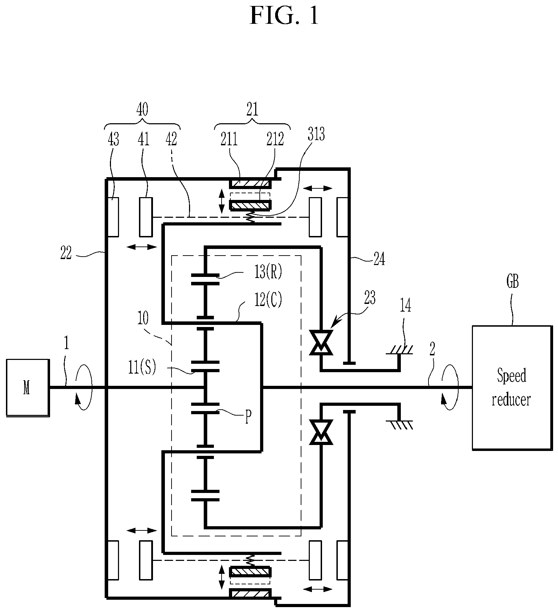

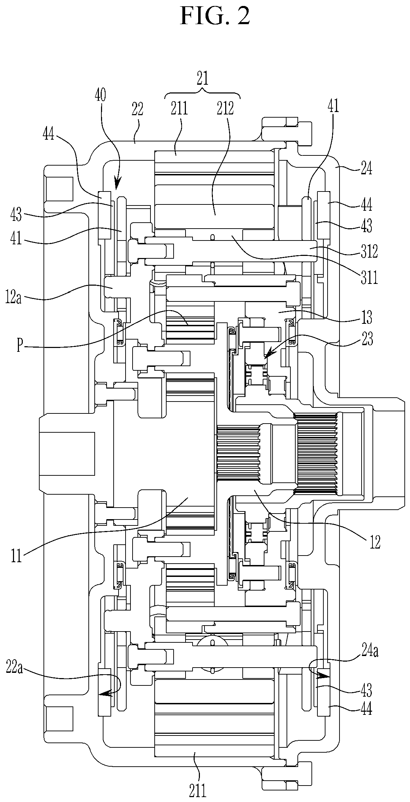

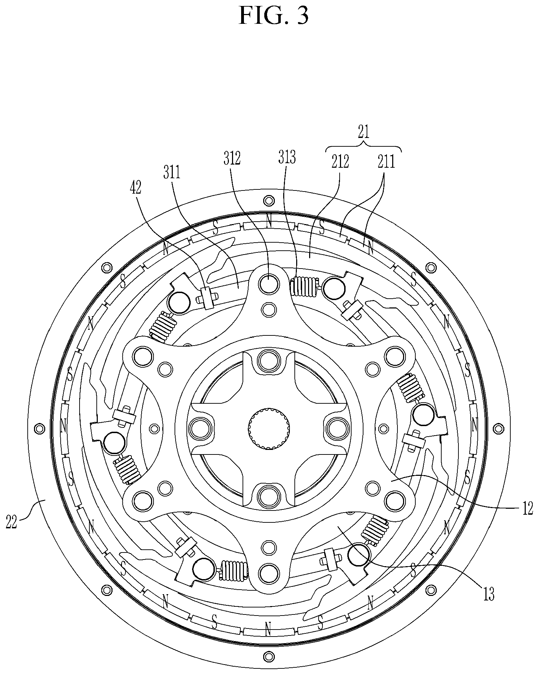

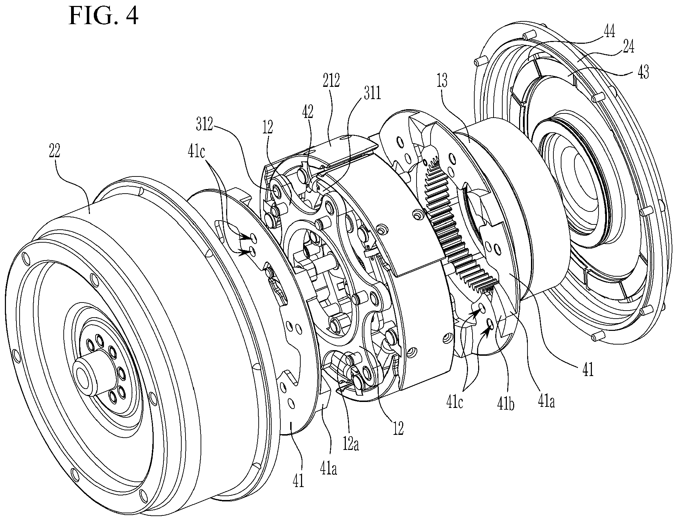

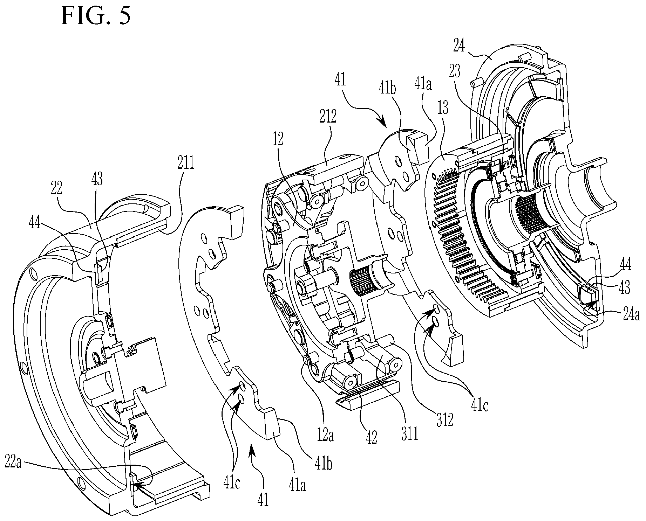

FIG. 1 is a schematic diagram of a dry type of torque converter for an electric vehicle according to an exemplary embodiment of the present invention, FIG. 2 is a cross-sectional view of a dry type of torque converter for an electric vehicle according to an exemplary embodiment of the present invention, FIG. 3 is a lateral view of a dry type of torque converter for an electric vehicle according to an exemplary embodiment of the present invention, and FIG. 4 and FIG. 5 are an exploded perspective view and a partial parted-exploded perspective view of a dry type of torque converter for an electric vehicle according to an exemplary embodiment of the present invention.

First, referring to FIG. 1, the dry type of torque converter for the electric vehicle according to an exemplary embodiment of the present invention is mounted between a drive motor M and a speed reducer GB (gear box) in a powertrain of an electric vehicle.

The dry type of torque converter for the electric vehicle is configured to connect the drive motor M and the speed reducer GB therebetween to deliver the output torque of the drive motor M to the speed reducer GB.

In the present exemplary embodiment, the dry type of torque converter is connected to the drive motor M with an input shaft 1 and is connected to the speed reducer GB with an output shaft 2, thereby the torque of the drive motor M input to the input shaft 1 is multiplied and transferred to be output to the speed reducer GB.

The dry type of torque converter thus constructed includes a first element 11, and a planetary gear 10 connected to the input shaft 1 and the output shaft 2 by providing a second element 12 and a third element 13.

In the planetary gear 10, the first element 11 is connected to the input shaft 1, the second element 12 is connected to the output shaft 2, and the third element 13 is variably connected to a fixing unit 14.

Referring to FIG. 1 to FIG. 5, in the planetary gear 10, the first element 11 is a sun gear S, the second element 12 is a carrier C connecting a pinion gear P, and the third element 13 is a ring gear R.

That is, in the planetary gear 10, the first element (the sun gear S, 11) is connected to the input shaft 1, the second element (the carrier C, 12) is connected to the output shaft 2, and the third element (the ring gear R, 13) is variably connected to the fixing unit 14.

The fixing unit 14 may be a powertrain of an electric vehicle or a body of the electric vehicle.

Here, the dry type of torque converter according to an exemplary embodiment of the present invention may further include an eddy current torque generation unit 21, a front cover 22, a one-way clutch 23, a back cover 24, and a lock-up mechanism 40.

First, the eddy current torque generation unit 21 is configured as a noncontact electromagnetic coupling which is inactivated or activated by an electromagnetic force generated by an eddy current.

This eddy current torque generation unit 21 is inactivated by the lack of a predetermined centrifugal force during low-speed rotation of the output shaft 2 so as to not generate the eddy current, and is activated by ensuring the predetermined centrifugal force during high-speed rotation of the output shaft 2 so as to generate the eddy current torque due to the eddy current.

Referring to FIG. 2 to FIG. 5, the eddy current torque generation unit 21 is disposed between the first element 11 connected to the input shaft 1 and the second element 12 connected to the output shaft 2.

A plurality of eddy current torque generation units 21 may be provided to be equally spaced along a circumferential direction of the second element 12.

Here, the eddy current torque generation unit 21 may include a permanent magnet 211 and a centrifugal member 212 having conductivity, which face each other in both sides (based on a radius direction).

The permanent magnet 211 is connected to the first element 11. The centrifugal member 212 is connected through a hinge arm 311 hinge-connected to the external circumferential surface of the second element 12, and may be controlled by a speed of the output shaft 2.

Here, hinge arms 311 are provided in plural to be disposed at equal intervals along the circumferential direction at the second element 12, and are mounted with a hinge pin 312. The hinge arms 311 are connected via an elastic member 313 at other positions of the second element 12 adjacent to one side.

The operation of the eddy current torque generation unit 21 thus constructed is described in more detail below.

In the present exemplary embodiment, the front cover 22 is integrally connected to the input shaft 1 and the first element 11, and may incorporate the planetary gear 10.

This front cover 22 may be coupled with the back cover 24 provided on the output shaft 2 side to accommodate the planetary gear 10, the eddy current torque generation unit 21, the one-way clutch 23, and the lock-up mechanism 40.

In the present exemplary embodiment, the permanent magnet 211 is disposed at a predetermined interval along the circumferential direction inside the radial direction of the front cover 22 connected to the first element 11. Here, the permanent magnet 211 may be repeatedly disposed with N poles and S poles along the inner circumferential surface of the front cover 22.

Accordingly, when the electric vehicle is initially driven, when the centrifugal force is insufficient at the output speed of the output shaft 2, the hinge arm 311 maintains the state that it is pivoted radially inwardly based on the hinge pin 312 by the tensile force provided from the elastic member 313 to keep the centrifugal member 212 away from the permanent magnet 211.

That is, when the electric vehicle is initially driven, the input torque is normally torque-multiplied by the gear ratio of the planetary gear 10 and may be transmitted to the speed reducer GB.

On the contrary, if the output speed of the output shaft 2 is increased to increase the centrifugal force due to the increase of the speed of the electric vehicle, the centrifugal force of the centrifugal body 212 overcomes the elastic force of the elastic member 313.

Then, the hinge arm 311 may be rotated about the hinge pin 312 outward in the radial direction to allow the centrifugal member 212 to approach the permanent magnet 211.

In this case, the eddy current is generated between the centrifugal member 212 and the permanent magnet 211, and the eddy current torque is generated by the eddy current to be transmitted to the first and second elements 11 and 12.

Here, the eddy current is a current that is generated by the interaction due to the rotation speed difference of the permanent magnet 211 and the centrifugal member 212 while the front cover 22 provided with the permanent magnet 211 and the centrifugal member 211 are rotated at different speeds.

Thus, the first and second elements 11 and 12 may be powered by the eddy current torque. That is, when the eddy current torque is generated, the speed ratio of the input shaft 1 and the output shaft 2 is increased to be the speed ratio by the gear ratio or more.

The eddy current torque generated between the centrifugal member 212 and the permanent magnet 211 may be larger as the relative speed difference is larger.

This eddy current torque raises the speed ratio of the centrifugal member 212 and the permanent magnet 211 to a set value (for example, 0.8 or more), so that the dry type of torque converter for the electric vehicle may realize the function of a conventional hydraulic torque converter.

The eddy current torque generation unit 21 configured as described above separates the permanent magnet 211 and the centrifugal member 212 from each other by the magnetic force formed between the permanent magnet 211 and the centrifugal member 212 by the eddy current torque, or may be powered with the eddy current torque.

Through this operation, the eddy current torque generation unit 21 separates the first element 11 and the second element 12 from each other and powers the eddy current torque.

On the other hand, in the present exemplary embodiment, the one-way clutch 23 may be disposed between the third element 13 and the fixing unit 14. This one-way clutch 23 interrupts the one direction connection of the third element 13 and the fixing unit 14.

That is, the one-way clutch 23 is able to connect the third element 13 in a direction (e.g., a forward direction) to be rotatable and blocks the rotation in an opposite direction (e.g., a backward direction).

For example, when the eddy current torque generation unit 21 is not operated, the one-way clutch 23 is operated to stop the third element 13. In contrast, when the eddy current torque generation unit 21 is operated, the one-way clutch 23 may not be operated to rotate the eddy current torque generation unit 21 and the third element 13 in the forward direction.

That is, when the speed ratio is driven by the gear ratio, the third element 13 is fixed by the operation control of the one-way clutch 23, and the output of the second element 12 is torque-multiplied normally. At this time, the eddy current torque generation unit 21 is not operated to enable the normal control of the planetary gear 10.

On the contrary, when the gear ratio exceeds the speed ratio, the eddy current torque generation unit 21 generates the eddy current torque due to the eddy current. Thus, the first element 11 and the second element 12 transmit the eddy current torque, and the output of the second element 12 transfers the torque.

Here, the eddy current torque mat raise the speed ratio more than the speed ratio by the gear ratio, and the one-way clutch 23 may not be operated to rotate the third element 13 of the planetary gear 10 in the forward direction.

On the other hand, in the present exemplary embodiment, the lock-up mechanism 40 is respectively provided on both sides of the second element 12 with respect to the axial direction. This lock-up mechanism 40 may be interlocked with the eddy current torque generation unit 21. That is, the lock-up mechanism 40 may be operated in conjunction with the operation or non-operation of the eddy current torque generation unit 21.

Here, while the lock-up mechanism 40 is selectively in contact with the inner surface of the front cover 22 and the back cover 24 by the centrifugal force transmitted to the eddy current torque generation unit 21 according to the rotation speed of the output shaft 2, the input shaft 1 and the output shaft 2 are directly connected.

Here, the lock-up mechanism 40 may include a lock-up plate 41, a roller 42, and a friction member 43.

First, the lock-up plate 41 is respectively disposed to be slidable in the axial direction on both sides of the second element 12 corresponding to the inner surfaces of the front cover 22 and the back cover 24 with respect to the axial direction.

The roller 42 may be composed of a pair and are mounted to be respectively rotatable on both sides of the hinge arm 311 between the lock-up plate 41 and the hinge arm 311 when the hinge arm 311 is moved outwardly in the radial direction by the centrifugal force generated depending on the rotation speed of the output shaft 2 so as to move the lock-up plate 41 to the front cover side 22 and the back cover 23 side, receptively.

The roller 42 is respectively disposed on both sides of the hinge arm 311 relative to the axis direction. In other words, the rollers 42 may be configured of a plurality of groups, in which one pair is one group, corresponding to the plurality of the hinge arms 311.

Here, the lock-up plate 41 is formed in a ring shape, and at least one contact portion 41a, which is in rolling contact with the roller 42, may be formed to be protruded on one surface corresponding to the roller 42.

The contact portion 41a may be respectively formed on one surface of the lock-up plate 41 facing the second element 12 with respect to the axis direction at a plurality of spaced apart positions along the circumferential direction.

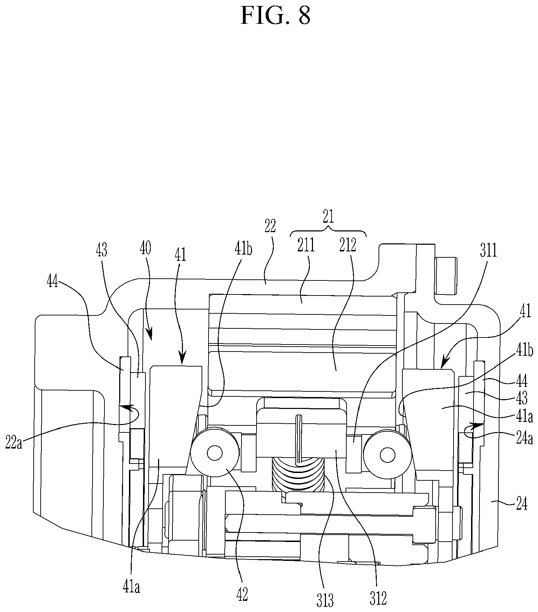

In this contact portion 41 a, an inclined surface 41 b, which is in rolling contact with the roller 42, is integrally formed (referring to FIG. 8).

The inclined surface 41b may have a width that is longer from the lower portion toward the rotation center of the first element 11 toward the upper portion toward the outer side of the radial direction.

Also, a plurality of guide holes 41c may be respectively formed in the lock-up plate 41.

First, a guide protrusion 12a formed on the second element 12 is inserted to the guide holes 41c of the lock-up plate 41 disposed toward the front cover 22 side.

The end of the hinge shaft 312, which rotatably supports the hinge arm 311, may be inserted into the guide holes 41c of the lock-up plate 41 disposed toward the back cover 24 side.

Accordingly, the lock-up plate 41 may be stably guided into the axis direction moving by the guide protrusion 12a inserted to each the guide holes 41c and the hinge shaft 312 when the hinge arm 311 slides and moves in the axis direction by the roller 42 moved together while being turned outwardly in the radial direction about the hinge pin 312.

In the present exemplary embodiment, the friction member 43 is mounted to the inner surfaces of the front cover 22 and the back cover 24 corresponding to each the lock-up plate 41.

The friction member 43 may be frictionally in contact with the lock-up plate 41 when the lock-up plate 41 approaches the inner surfaces of the front cover 22 and the back cover 24 based on the axis direction.

Here, the friction member 43 is mounted through a mounting plate 44 mounted on the front cover 22 and on the back cover 24, respectively. The mounting plate 44 may be mounted on mounting grooves 22a and 24a formed on the inner surfaces of the front cover 22 and the back cover 24, respectively.

In addition, the friction member 43 may be mounted in plural on one surface of the mounting plate 44 facing the lock-up plate 41 to be spaced apart in the circumferential direction.

That is, if the centrifugal force is increased according to the rotation speed of the output shaft 2, the eddy current torque generation unit 21 may generate the eddy current torque due to the eddy current generated while the centrifugal member 212 approaches the permanent magnet 211.

In this state, as the rotation speed of the output shaft 2 further increases, the hinge arm 311 brings the centrifugal member 212 closer to the permanent magnet 211 while moving outwardly toward the radial direction and.

At this time, in the state that the roller 42 is in rolling contact with the inclined surface 41b of the contact portion 41a provided on the lock-up plate 41, the roller 42 moves the lock-up plate 41 to the front cover 22 side and the back cover 24 side while being moved outward in the radial direction together with the hinge arm 311.

Thus, the lock-up plate 41 is frictionally in contact with the friction member 43 while being moved toward the inner surfaces of the front cover 22 and the back cover 24 by the roller 42.

Accordingly, the eddy current torque generation unit 21 is not operated, and the lock-up mechanism 40 is operated to perform the lock-up function.

As the lock-up mechanism 40 configured as above-described is interlocked with the operation of the eddy current torque generation unit 21, in operation, connects the first and second elements 11 and 12, the front cover 22, and the back cover 24, and the input shaft 1 and the output shaft 2 may be directly connected.

Accordingly, when the lock-up mechanism 40 is operated, the input shaft 1 and the output shaft 2 are directly connected to transmit the input and output speed at 1:1, and the torque of the drive motor M may be transmitted directly to the transmission.

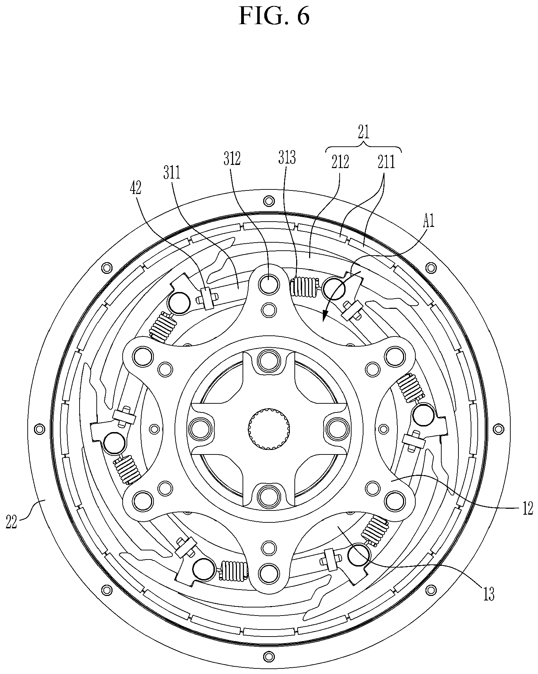

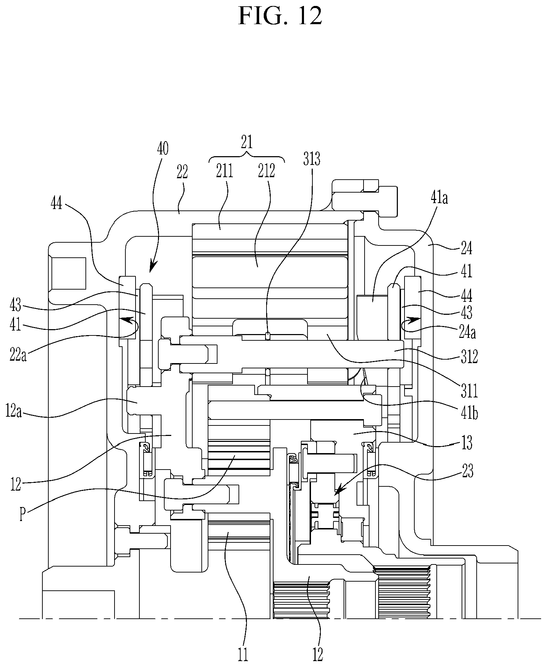

Next, the operation of the dry type of torque converter for the electric vehicle according to an exemplary embodiment of the present invention is described with reference to FIG. 6 to FIG. 13.

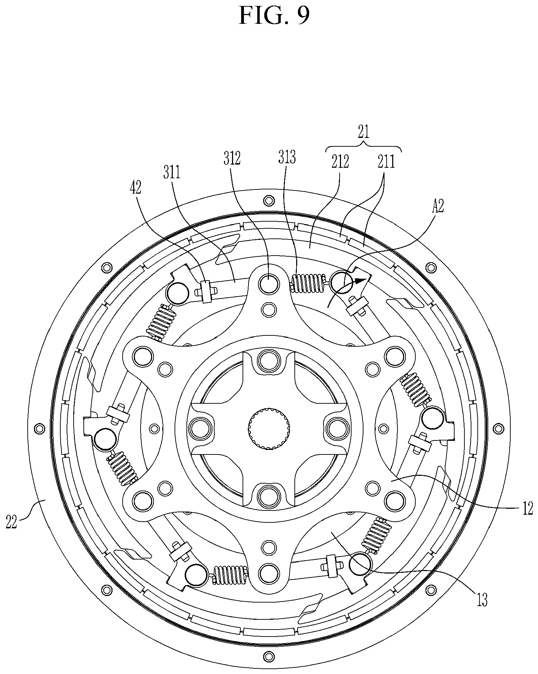

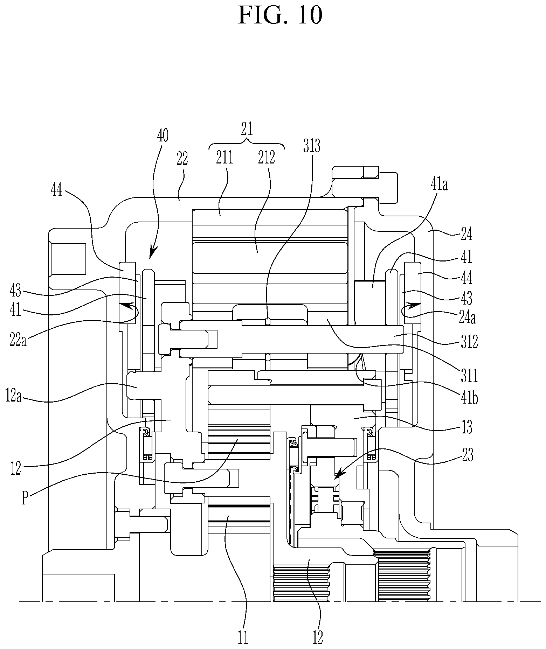

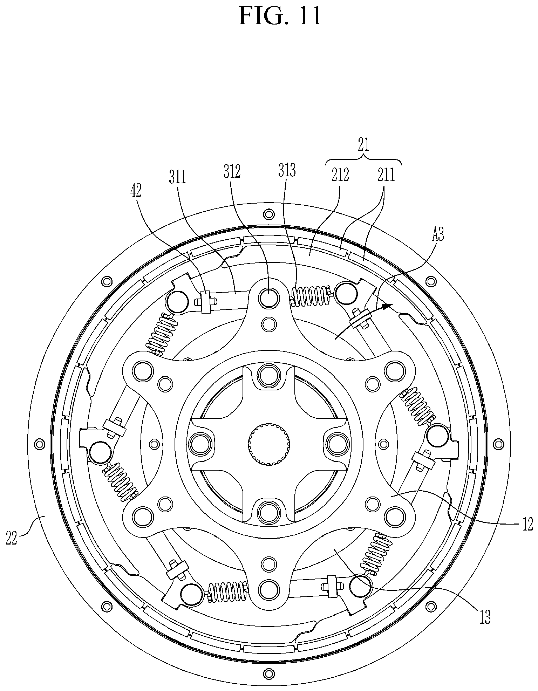

FIG. 6 to FIG. 8 are views showing states of an operation of a planetary gear, a non-operation of an eddy current torque generation unit, and a non-operation of a lock-up mechanism, which are applied to a dry type of torque converter for an electric vehicle according to an exemplary embodiment of the present invention, FIG. 9 and FIG. 10 are views showing states of a non-operation of a planetary gear, an operation of an eddy current torque generation unit, and a non-operation of a lock-up mechanism, which are applied to a dry type of torque converter for an electric vehicle according to an exemplary embodiment of the present invention, and FIG. 11 to FIG. 13 are views showing states of a non-operation of a planetary gear, a non-operation of an eddy current torque generation unit, and an operation of a lock-up mechanism, which are applied to a dry type of torque converter for an electric vehicle according to an exemplary embodiment of the present invention.

First, the operation of the initial driving of the electric vehicle is described with reference to FIG. 6 to FIG. 8.

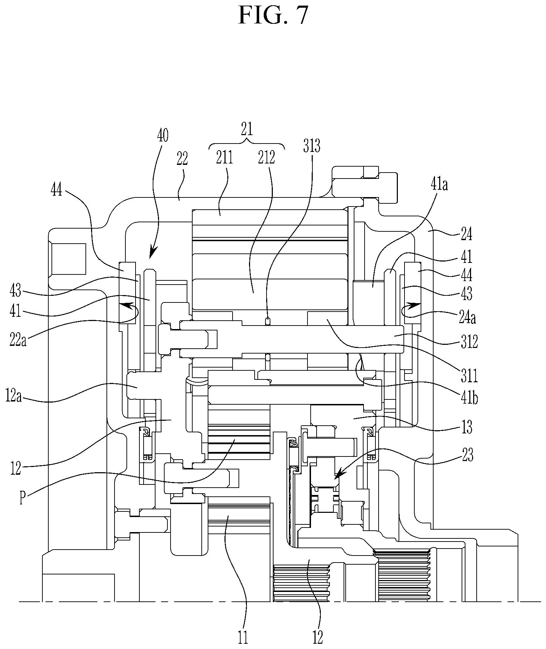

When the electric vehicle is initially driven, the planetary gear 10 is operated, but the eddy current torque generation unit 21 is not operated due to lack of the centrifugal force due to the low speed rotation of the output shaft 2 (A1), thereby the eddy current is not generated (referring to FIG. 6 and FIG. 7). Therefore, the torque due to the eddy current is not generated.

That is, when the centrifugal force is insufficient at the output speed of the output shaft 2, the hinge arm 311 is maintained with the state that it is pivoted inwardly in the radius direction about the hinge pin 312 by the tension force provided from the elastic member 313. Accordingly, the centrifugal member 212 maintains its initial state away from the permanent magnet 211.

Here, the one-way clutch 23 is operated to stop the third element 13 as the eddy current torque generation unit 21 is not operated.

At this time, as the lock-up mechanism 40 maintains the initial state in which the eddy current torque generation unit 21 is not operated, as shown in FIG. 8, the non-operation state may be maintained by not moving the lock-up plate 41.

Then, during the initial driving of the electric vehicle, the torque ratio of the planetary gear 10 causes the input torque to be multiplied as the normal torque, which may then be transferred to the speed reducer GB.

In this state, if the output speed of the output shaft 2 is increased to increase the centrifugal force, as shown in FIG. 9 and FIG. 10, the centrifugal force of the centrifugal member 212 overcomes the elastic force of the elastic member 313.

Then, the hinge arm 311 is turned outwardly in the radial direction about the hinge pin 312, thereby approaching the centrifugal body 212 to the permanent magnet 211.

In this case, the eddy current torque generation unit 21 is operated (A2) to generate the eddy current between the centrifugal member 212 and the permanent magnet 211, and the eddy current torque generated by the eddy current is transmitted to the first and second elements 11 and 12.

Thus, the first and second elements 11 and 12 may be powered by the eddy current torque. That is, when the eddy current torque is generated, the speed ratio of the input shaft 1 and the output shaft 2 is increased beyond the speed ratio by the gear.

The eddy current torque generated between the centrifugal member 212 and the permanent magnet 211 may be larger as the relative speed difference is larger.

In the present exemplary embodiment, the eddy current torque raises the speed ratio of the centrifugal member 212 and the permanent magnet 211 into a set value (e.g., greater than 0.8), so that the dry torque converter for the electric vehicle may implement the function of the conventional hydraulic torque converter.

In addition, when the eddy current torque generation unit 21 is operated (A2), the one-way clutch 23 may not be operated to rotate the eddy current torque generation unit 21 and the third element 13 in the forward direction.

Here, in the lock-up mechanism 40, the lock-up plates 41 in rolling contact with the roller 42 move in the axis direction by a predetermined distance toward the inner surface of the front and back covers 22 and 24 as the hinge arm 311 is rotated outwardly in the radial direction about the hinge shaft 312.

However, since the centrifugal member 212 is not completely in contact with the permanent magnet 211, the lock-up plate 41 remains at a constant distance from the friction member 43 so as to not be frictionally contacted, thereby not being operated.

Also, if the output speed of the output shaft 2 continues to increase, as shown in FIG. 11 to FIG. 13, the centrifugal force of the centrifugal member 212 further overcomes the elastic force of the elastic member 313.

The hinge arm 311 is then pivoted outwardly in the radial direction about the hinge pin 312 to bring the centrifugal member 212 closer to the permanent magnet 211.

In this case, the roller 42 of the lock-up mechanism 40 moves outwardly in the radial direction by the hinge arm 311 in the state that the roller 42 is in rolling contact with the inclined surface 41b of the contact portion 41a formed on the lock-up plate 41.

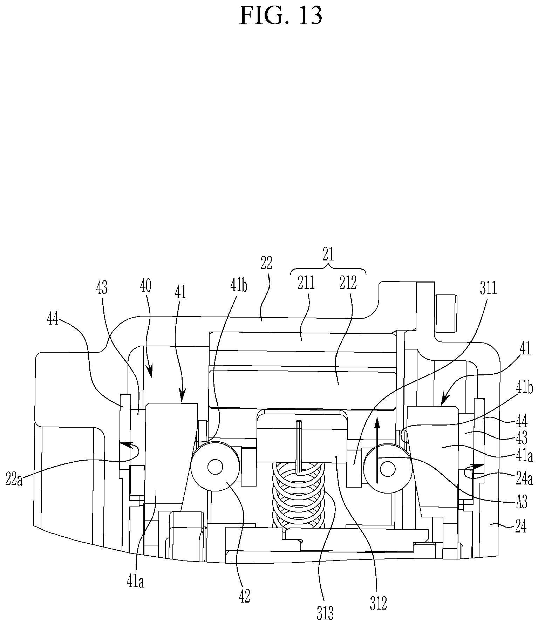

Then, the lock-up plate 41 moves toward the inner surface of the front and back covers 22 and 24 by the roller 42 moving upwards based on FIG. 13, and frictionally contacts the friction member 42.

Thus, if the lock-up mechanism 40 is operated (A3), the input shaft 1 and the output shaft 2 are directly connected through the front cover 22 and the back cover 24. At this time, as the front cover 22 and the back cover 24 are rotated together, the generating of the eddy current is stopped in the eddy current torque generation unit 21.

Accordingly, if the lock-up mechanism 40 is operated (A3) while the eddy current torque generation unit 21 is not operated, as the first and second elements 11 and 12, the front cover 22, and the back cover 24 are connected, the input shaft 1 and the output shaft 2 may be directly connected.

That is, when the lock-up mechanism 40 is operated, by directly connecting the input shaft 1 and the output shaft 2, the input and output speed may be transmitted at 1:1, and the torque of the drive motor M may be directly transmitted to the transmission.

According to an exemplary embodiment of the present invention, the dry type of torque converter for the electric vehicle thus constructed may be integrally mounted on the drive motor M or integrally mounted on the speed reducer GB.

The dry torque converter for the electric vehicle thus constructed includes an input assembly, an output assembly, and a reactor assembly.

The input assembly may include the input shaft 1, the first element 11 connected to the input shaft 1, the front cover 22, the back cover 24, and the permanent magnet 211 installed at the front cover 22.

The output assembly may include the output shaft 2, the second element 12 and the pinion gear P, which are connected to the output shaft 2, and the centrifugal member 212 disposed at the second element 12 and facing the permanent magnet 211, and the lock-up mechanism 40.

Also, the reactor assembly may include the one-way clutch 23 mutually connecting the third element 13 and the fixing unit 14.

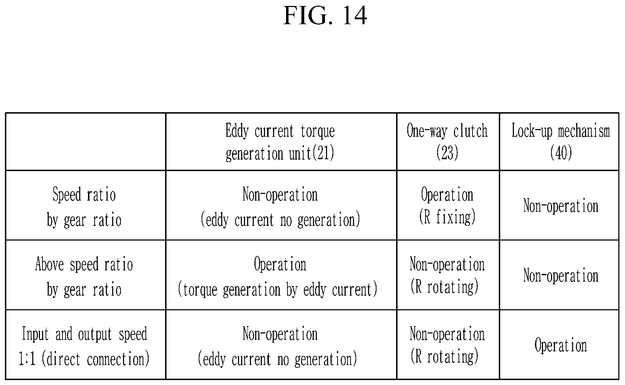

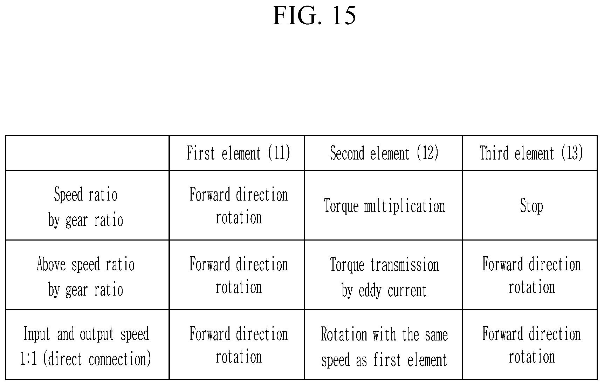

FIG. 14 is a table showing an operation of an eddy current torque generation unit, a lock-up mechanism, and a one-way clutch, which are controlled by a control method of a dry type of torque converter for an electric vehicle according to an exemplary embodiment of the present invention, and FIG. 15 is a table showing an operation of planetary gear elements controlling by a control method of a dry type of torque converter for an electric vehicle according to an exemplary embodiment of the present invention.

Referring to FIG. 14 to FIG. 15, a control method of the dry type of torque converter for the electric vehicle according to an exemplary embodiment of the present invention includes a first step of multiplying the normal torque output to the second element 12 in the speed ratio (during the initial driving) by the gear ratio, a second step of transmitting the torque output to the second element 12 in the speed ratio (when increasing the centrifugal force) or more by the gear ratio, and a third step of directly connecting the input shaft 1 and the output shaft 2 by directly connecting the first and second elements 11 and 12 while being respectively in contact with the inner surface of the axis direction of the front cover 22 and the back cover 24 by the operation control of the lock-up mechanism 40 in the speed ratio (when the centrifugal force is further increased) or more by the gear ratio.

The first step multiplies the normal torque output to the second element 12 by fixing and controlling the third element 13 by the operation control of the one-way clutch 23 in the speed ratio (during the initial driving) by the gear ratio.

The first step controls the eddy current torque generation unit 21 and the lock-up mechanism 40 to not be operated (referring to FIG. 6 and FIG. 8) by the operation of the one-way clutch 23. As a result, the third element 13 is fixed to the fixing unit 14.

Also, in the first step, the eddy current is not generated by the non-operation of the eddy current torque generation unit 21, thus, part of the torque of the output shaft 2 may be transmitted to the second element 12.

Accordingly, in the dry type of torque converter according to an exemplary embodiment of the present invention, during the initial driving of the electric vehicle mounting the same, the second element 12 multiples the input torque input while the first element 11 is rotated in the forward direction by the speed ratio due to the gear ratio of the planetary gear 10 to be output to the speed reducer GB. In this case, the third element 13 is fixed.

In other words, as the initial speed of the electric vehicle is low, since the centrifugal force is insufficient, the centrifugal member 212 is not operated. The permanent magnet 211 may then remain spaced apart from the centrifugal member 212 (referring to FIG. 6).

Thus, in the eddy current torque generation unit 21, there is no transfer torque due to the eddy current between the centrifugal member 212 and the permanent magnet 211.

In the second step, in the speed ratio (when the centrifugal force increases) or more by the gear ratio depending on the speed increasing of the output shaft 2, the eddy current is generated by the operation control of the eddy current torque generation unit 21.

This eddy current generates the eddy current torque, and the first element (the sun gear 11) and the second element (the carrier 12) may transmit the power as the generated eddy current torque to transmit the torque output to the second element 12.

Here, the second step controls the one-way clutch 23 and the lock-up mechanism 40 to not be operated by the operation of the eddy current torque generation unit 21. Accordingly, the third element 13 may be rotated in the same direction (the forward direction) as the first and second elements 11 and 12 that are rotated in the forward direction.

Also, the second step transmits the torque of the output shaft 2 to the second element 12 and the eddy current torque generation unit 21 by the eddy current torque generated by the operation of the eddy current torque generation unit 21.

That is, if the output rotation speed of the dry type of torque converter is increased due to the speed increase of the electric vehicle, the centrifugal force of the output shaft 2 is increased such that the centrifugal member 212 moves outwardly toward the radial direction.

Through this operation, the permanent magnet 211 and the centrifugal member 212, which are close to each other, may generate the eddy current due to the interaction due to the speed difference (referring to FIG. 9).

Thus, the eddy current torque is generated due to the magnetic force of the permanent magnet 211 and the influence of the eddy current, and the generated eddy current torque may increase the speed ratio. At this time, the third element 13 is rotated in the input direction.

The third step controls the operation of the lock-up mechanism 40, which is interlocked with the eddy current torque generation unit 21 provided at the second element 12 as the speed of the output shaft 2 further increases in the state above the speed ratio by the gear ratio.

In this case, in the lock-up mechanism 40 operated by the eddy current torque generation unit 21, the lock-up plate 41 directly connects the first and second elements 11 and 12 while being respectively in frictional contact with the friction member 43 provided at the inner surface in the axis direction of the front cover 22 and the back cover 24, thereby directly connecting the input shaft 1 and the output shaft 2.

Here, the third step may allow the non-operation control of the one-way clutch 23 and the non-operation control of the eddy current torque generation unit 21 due to the operation of the lock-up mechanism 40.

Accordingly, the third element 13 may be rotated in the same direction (the forward direction) as the first, second elements 11 and 12 rotated in the forward direction, and the second element 12 may be rotated at the same speed as the first element 11.

Also, the third step may directly connect the input shaft 1 and the output shaft 2 so that the rotation speed of the input shaft 1 and the output shaft 2 becomes 1:1 by the operation of the lock-up mechanism 40, the non-operation of the one-way clutch 23, and the non-operation of the eddy current torque generation unit 21.

In other words, as the input shaft 1 and the output shaft 2 are directly connected, the torque of the drive motor M can be directly transmitted to the transmission, so that the input and output speeds may be transmitted at 1:1.

As above-described, the dry type of torque converter according to the present exemplary embodiment is mounted between the drive motor M and the speed reducer GB in the powertrain for the electric vehicle, the torque of the drive motor M is multiplied normally more than the speed by the gear ratio during the initial driving, and is multiplied by the eddy current torque during the increasing of the output speed to be transmitted to the speed reducer GB.

Also, when the output speed is increased more than the setting speed, the first and second elements 11 and 12 are directly connected through the operation of the lock-up mechanism 40 to directly connect the input shaft 1 and the output shaft 2, thereby transmitting the input and output speed at 1:1.

Accordingly, in the dry type of torque converter for the electric vehicle and the control method according to an exemplary embodiment of the present invention, as the eddy current torque generation unit 21 is provided between the first element 11 (the sun gear) and the second element 12 (the carrier) of the planetary gear 10, the eddy current may not be generated by the rotation speed of the output shaft 1 or the first and second elements 11 and 12 may be disconnected due to the eddy current torque generated by the eddy current or may transmit the power by the eddy current torque, and as the third element 13 (the ring gear) and the fixing unit 14 are fixed or controlled to be rotated in one direction by the one-way clutch 23, the torque is multiplied in the speed ratio by the gear ratio or the eddy current torque may be output above the speed ratio by the gear ratio.

Further, in the present invention, since the torque multiplication ratio is large, the size of the drive motor M and the inverter connected to the input shaft 1 may be reduced, and the current consumption of the drive motor M may be reduced by entering into a fast high efficiency area through the high speed rotation of the drive motor M.

In addition, the present invention may reduce the manufacturing cost by controlling the output torque up to 0.8 of the input and output speed ratio by the centrifugal force of the output speed without a separate actuator.

Also, the present invention may directly transmit the torque of the drive motor M through the application of the lock-up mechanism 40 along with the torque multiplication by using the planetary gear 10 and the speed ratio increasing function by using the eddy current of the eddy current torque generation unit 21, so that the input and output speed may be transmitted at 1:1 and all the functions of the conventional hydraulic torque converter may be realized.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. A dry type of torque converter for an electric vehicle, comprising:
a planetary gear including a first element connected to an input shaft, a second element connected to an output shaft, and a third element variably connected to a fixing unit;
at least one eddy current torque generation unit provided between the first element and the second element and generating an eddy current to be controlled by a speed of the output shaft;
a front cover integrally connected to the input shaft and the first element and incorporating the planetary gear;
a one-way clutch interlocking one-direction connection of the third element and the fixing unit and connecting them to each other;
a back cover provided at the output shaft side to be coupled with the front cover; and
a lock-up mechanism respectively provided on both sides of the second element based on an axis direction and directly connecting the input shaft and the output shaft while being respectively in selective contact with inner surfaces of the front cover and the back cover by centrifugal force generated depending on the rotation speed of the output shaft.

2. The dry type of torque converter for the electric vehicle of claim 1, wherein
the eddy current torque generation unit includes:
a permanent magnet connected to the first element; and
a centrifugal member disposed facing the permanent magnet to have conductivity, connected through a hinge arm hinge-connected to an external circumferential surface of the second element, and controlled by a speed of the output shaft.

3. The dry type of torque converter for the electric vehicle of claim 2, wherein
the permanent magnet is disposed at a predetermined interval along the circumferential direction inside the radial direction of the front cover, and
the centrifugal member is connected to the second element through an elastic member.

4. The dry type of torque converter for the electric vehicle of claim 2, wherein,
in the permanent magnet,
an N pole and an S pole are repeatedly arranged along an inner circumferential surface of the front cover.

5. The dry type of torque converter for the electric vehicle of claim 2, wherein
the lock-up mechanism includes:
a lock-up plate disposed to be slidable in the axis direction on both sides of the second element by corresponding to the inner surfaces of the front cover and the back cover based on the axis direction;
a pair of rollers mounted to be respectively rotatable on both sides of the hinge arm between the lock-up plate and the hinge arm to move the lock-up plate to the front cover side and the back cover side when the hinge arm moves outwardly in the radial direction by the centrifugal force generated depending on the rotation speed of the output shaft; and
a friction member mounted on the inner surface of the front cover and the back cover by corresponding to each lock-up plate.

6. The dry type of torque converter for the electric vehicle of claim 5, wherein
the lock-up plate is formed with a ring shape, and at least one contact portion in rolling contact with the roller is formed to be protruded at one surface corresponding to the roller.

7. The dry type of torque converter for the electric vehicle of claim 6, wherein
the contact portion is respectively formed in plural at spaced positions along the circumferential direction at one surface of the lock-up plate toward the second element based on the axis direction.

8. The dry type of torque converter for the electric vehicle of claim 6, wherein
the inclined surface in rolling contact with the roller is integrally formed in the contact portion.

9. The dry type of torque converter for the electric vehicle of claim 8, wherein
the inclined surface has a width that is elongated from the lower part toward the rotation center of the first element toward the upper part outwardly in the radial direction.

10. The dry type of torque converter for the electric vehicle of claim 5, wherein
a guide hole is respectively formed in the lock-up plates,
a guide protrusion formed at the second element is inserted into the guide hole of the lock-up plate disposed toward the front cover side, and
an end of a hinge shaft supporting the hinge arm to be rotatable is inserted into the guide hole of the lock-up plate disposed toward the back cover side.

11. The dry type of torque converter for the electric vehicle of claim 10, wherein
when the lock-up plate slides and moves in the axis direction by the roller, the axis direction movement is guided by the guide protrusion inserted into each the guide hole and the hinge shaft.

12. The dry type of torque converter for the electric vehicle of claim 5, wherein
the friction member is mounted through a mounting plate respectively mounted on the front cover and the back cover.

13. The dry type of torque converter for the electric vehicle of claim 12, wherein
the mounting plate is mounted on a mounting groove respectively formed on the inner surfaces of the front cover and the back cover.

14. The dry type of torque converter for the electric vehicle of claim 12, wherein
the friction member is mounted in plural to be spaced from each other along a circumferential direction on one surface of the mounting plate toward the lock-up plate.

15. The dry type of torque converter for the electric vehicle of claim 1, wherein
the eddy current torque generation unit disconnects the first element and the second element or transmits power with an eddy current torque depending on a speed of the output shaft.

16. The dry type of torque converter for the electric vehicle of claim 1, wherein
the first element is a sun gear,
the second element is a carrier, and
the third element is a ring gear.

17. The dry type of torque converter for the electric vehicle of claim 1, wherein
the eddy current torque generation unit is provided to be spaced with an equal interval along the circumferential direction of the second element.

18. A control method of a dry type of torque converter for an electric vehicle, comprising,
in a planetary gear having a first element connected to an input shaft, a second element connected to an output shaft, a third element variably connected to a fixing unit, and a speed ratio by a predetermined gear ratio:
a first step of multiplying a torque output to the second element by fixing and controlling the third element by operation control of a one-way clutch provided between the third element and the fixing unit in a speed ratio by the gear ratio;
a second step transmitting a torque output to the second element by transmitting power as an eddy current torque generated by an eddy current to the first element and the second element by operation control of an eddy current torque generation unit provided between the first element and the second element above the speed ratio by the gear ratio depending on a speed increase of the output shaft; and
a third step of directly connecting the input shaft and the output shaft by directly connecting the first and second elements while respectively being in contact with the inner surfaces of a front cover and a back cover in an axis direction by operation control of a lock-up mechanism provided on the second element depending on a speed increase of the output shaft above the speed ratio by the gear ratio and interlocked with the eddy current torque generation unit.

19. The control method of the dry type of torque converter for the electric vehicle of claim 18, wherein
the first step controls the eddy current torque generation unit and the lock-up mechanism to not be operated by the operation of the one-way clutch.

20. The control method of the dry type of torque converter for the electric vehicle of claim 19, wherein
the first step transmits a part of the output shaft torque to the second element by the non-operation of the eddy current torque generation unit.

21. The control method of the dry type of torque converter for the electric vehicle of claim 18, wherein
the second step controls the one-way clutch and the lock-up mechanism to not be operated by the operation of the eddy current torque generation unit.

22. The control method of the dry type of torque converter for the electric vehicle of claim 21, wherein
the second step transmits the torque of the output shaft to the second element and the eddy current torque generation unit by the operation of the eddy current torque generation unit.

23. The control method of the dry type of torque converter for the electric vehicle of claim 18, wherein
the third step controls the one-way clutch to not be operated and the eddy current torque generation unit to not be operated by the operation of the lock-up mechanism.

24. The control method of the dry type of torque converter for the electric vehicle of claim 23, wherein
the third step directly connects the input shaft and the output shaft so that a rotation speed of the input shaft and the output shaft becomes 1:1 by the operation of the lock-up mechanism, the non-operation of the one-way clutch, and the non-operation of the eddy current torque generation unit.
